# EUROPEAN PATENT APPLICATION

(11) **EP 1 386 941 A1**
(43) Date of publication of application: **04.02.2004**
(21) Application number: 03017098.9
(22) Date of filing: 28.07.2003
(51) Int. Cl.: C08K 3/00, C08L 23/02, C09J 7/02, C09J 11/04

(54) **Pressure-sensitive adhesive tape or sheet**

(30) Priority: 29.07.2002 JP 2002219193
(71) Applicant: NITTO DENKO CORPORATION, Osaka (JP)
(72) Inventor: Fujiwara, Shuzo, Ibaraki-shi, Osaka (JP); Shirai, Masato, Ibaraki-shi, Osaka (JP); Kawaguchi, Yoshihide, Ibaraki-shi, Osaka (JP); Nakagawa, Yoshio, Ibaraki-shi, Osaka (JP); Ukei, Hiroichi, Ibaraki-shi, Osaka (JP)
(74) Representative: Grünecker, Kinkeldey, Stockmair & Schwanhäusser Anwaltssozietät

(57) **Abstract**

The pressure-sensitive adhesive tape or sheet contains a base material containing a polyolefin resin and an inorganic flame retardant and containing substantially no halogen atoms and a pressure-sensitive adhesive layer formed on one side of the base material, the base material bearing on the other side thereof at least one of a character and a design constituted of a structure comprising recesses, protrusions or both of them united to the base material.

## Description

### FIELD OF THE INVENTION

The. present invention relates to a pressure-sensitive adhesive tape or sheet employing a polyolefin resin composition as the base material. More particularly, the invention relates to a pressure-sensitive adhesive tape or sheet which has flame retardancy, contains substantially no halogen atoms, and retains the state bearing a character and/or a design even after long-term use and which can hence be easily judged, at the time of, for example, discard after use, as to whether it should be subjected to recycling of resources, incineration disposal, etc.

### BACKGROUND OF THE INVENTION

Pressure-sensitive adhesive tapes or sheets employing a poly(vinyl chloride) film as the base material (often referred to as "poly(vinyl chloride) pressure-sensitive adhesive tapes") have been used, for example, in applications such as, e.g., electric-wire binding and electrical insulation in domestic electrical appliances and motor vehicles and masking in coating operations. Recently, however, the trend toward inhibition of the use of vinyl chloride is spreading in various fields from the standpoint of environmental problems, and the use of poly(vinyl chloride) pressure-sensitive adhesive tapes also tends to be avoided. Under these circumstances, various pressure-sensitive adhesive tape products not containing poly(vinyl chloride) as a base material component are being investigated. Substitutes for poly(vinyl chloride) pressure-sensitive adhesive tapes tend to be gradually marketed in the future.

In applications such as electric-wire binding and electrical insulation in domestic electrical appliances and motor vehicles, the pressure-sensitive adhesive tapes or sheets are required to have flame retardancy.

When pressure-sensitive adhesive tapes or sheets suitable for incineration disposal or recycling of resources come on to the market as substitutes for poly(vinyl chloride) pressure-sensitive adhesive tapes, it becomes necessary that whether or not a pressure-sensitive adhesive tape or sheet which has been used is suitable for incineration disposal is judged by the consumer at the time of, e.g., discard after use. Furthermore, it is thought that from the standpoint of future recycling of resources, a judgement as to whether a pressure-sensitive adhesive tape or sheet which has been used can be subjected to recycling of resources comes to be required increasingly at the time of discard.

In the case of pressure-sensitive adhesive tapes or sheets heretofore in use, it is possible to know, before application, the materials of the pressure-sensitive adhesive tape or sheet (e.g., material of the base material and kind of the pressure-sensitive adhesive) from the information (product information) written on the core, packaging material, etc. However, once the pressure-sensitive adhesive tape or sheet is cut or applied, it is difficult to know the materials of the pressure-sensitive adhesive tape or sheet.

In general, industrial products made of plastic materials have their respective life periods. For example, pressure-sensitive adhesive tapes or sheets having a base material comprising a polyolefin resin also have a life period and, after the lapse of the life period, the base material and the pressure-sensitive adhesive come to deteriorate. The function of the pressure-sensitive adhesive tapes or sheets thus decreases and, finally, the pressure-sensitive adhesive tapes or sheets do not come to function. In the case of the pressure-sensitive adhesive tapes or sheets presently in use, there is no way to know the date of production thereof once the pressure-sensitive adhesive tapes or sheets are applied. It is also impossible to know the life limit or life period. Furthermore, there is a problem that it is impossible, after application, to know the name of the manufacturer of the pressure-sensitive adhesive tape or sheet and the name of the product.

As described above, in the case of the pressure-sensitive adhesive tapes or sheets heretofore in use, it is impossible, after application, to know product information such as any marking concerning recycling (e.g., a marking showing the materials of the pressure-sensitive adhesive tape or sheet and indicating that the product is suitable for recycling of resources; or a marking indicating that the product is suitable for incineration disposal), name of the manufacturer, product name, date to production, life limit, life period, logo, material or kind of the base material or pressure-sensitive adhesive, kind and content of a component, etc.

On the other hand, a method generally used for imparting a marking such as characters to a pressure-sensitive adhesive tape or sheet itself is to print the base material. However, when a printed pressure-sensitive adhesive tape or sheet is used in applications where a prolonged life period is required, e.g., binding of automotive wire harnesses, there has been a possibility that the printed marking might become unclear with the lapse of time and, in some cases, disappear.

Although pressure-sensitive adhesive tapes or sheets employing a plastic film comprising a polyolefin resin are frequently used as substitutes for poly(vinyl chloride) pressure-sensitive adhesive tapes, there have been cases where use of this plastic film necessitates a pretreatment for improving adhesion of printing inks thereto.

### SUMMARY OF THE INVENTION

Accordingly, an object of the invention is to provide a pressure-sensitive adhesive tape or sheet which has flame retardancy, contains substantially no halogen atoms, and retains the state bearing a character and/or a design even after long-term use.

Another object of the invention is to provide a pressure-sensitive adhesive tape or sheet in which product information can be read even after the lapse of a prolonged time period from application.

Still another object of the invention is to provide a pressure-sensitive adhesive tape or sheet which, at the time of discard after use, can be easily judged as to whether it should be subjected to recycling of resources or incineration disposal.

The present inventors made intensive investigations in order to accomplish those objects. As a result, they have found that when a base material comprising a specific resin composition is used as the base material of a pressure-sensitive adhesive tape or sheet and a character and/or design of a specific structure is imparted in a specific state to the base material, then the pressure-sensitive adhesive tape or sheet retains the state bearing the character and/or design even after long-term use. The invention has been completed based on this finding.

The invention provides a pressure-sensitive adhesive tape or sheet which comprises a base material comprising a polyolefin resin and an inorganic flame retardant and containing substantially no halogen atoms and a pressure-sensitive adhesive layer formed on one side of the base material, the base material bearing on the other side thereof a character and/or design constituted of a structure comprising recesses and/or protrusions united to the base material.

In the invention, the character and/or design preferably is one formed by stamping the base material. The character and/or design may be a marking concerning recycling.

### BRIEF DESCRIPTION OF THE DRAWINGS

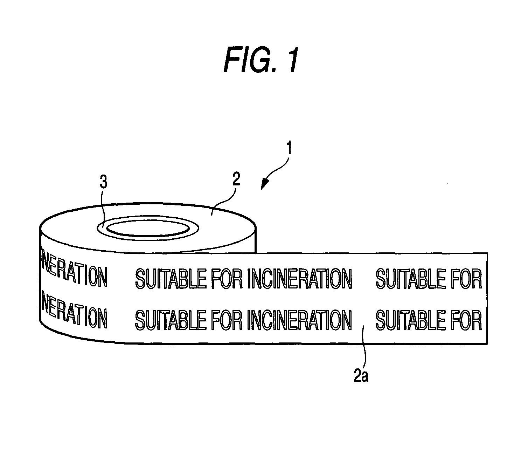

Fig. 1 is a diagrammatic view illustrating the pressure-sensitive adhesive tape produced in Example 1. Description of Reference Numerals and Sign
   1 pressure-sensitive adhesive tape rolled on core
   2 pressure-sensitive adhesive tape wound into roll
   2a the side of the pressure-sensitive adhesive tape 2 which is opposite to pressure-sensitive adhesive layer
   3 core

### DETAILED DESCRIPTION OF THE INVENTION

It is important that the base material in the pressure-sensitive adhesive tape or sheet (often referred to as "pressure-sensitive adhesive tape base material") of the invention be constituted of a plastic material comprising a polyolefin resin and an inorganic flame retardant and containing substantially no halogen atoms. The term "containing substantially no halogen atom" as used herein means that the material constituting the pressure-sensitive adhesive tape base material (plastic film) includes no substance containing one or more halogen atoms in the molecule. Consequently, the presence in the pressure-sensitive adhesive tape base material of halogen atoms detected in a trace amount in compositional analysis with an analytical instrument (e.g., halogen atoms which have come into the constituent materials of the pressure-sensitive adhesive tape base material from a halogen atom-containing substance used as a catalyst in the synthesis of a compound (a component of the pressure-sensitive adhesive tape base material) and are detected in a trace amount) is allowable.

Examples of the polyolefin resin include polyethylenes (e.g., low-density polyethylene, linear low-density polyethylene, ultralow-density polyethylene, medium-density polyethylene, and high-density polyethylene), polypropylene, polybutene, polybutylene, polybutadiene, and copolymers (especially random copolymers) of ethylene and/or propylene with other α-olefin(s), such as ethylene/propylene copolymers (random copolymers). Preferred polyolefin resins are polyethylenes and polypropylene, especially polyethylenes. Such polyolefin resins can be used alone or in combination of two or more thereof.

The polyolefin resin can be used in combination with another resin. From the standpoint of imparting moderate flexibility to the pressure-sensitive adhesive tape base material, a thermoplastic resin having carbonylic oxygen atoms in the molecular framework can be advantageously used as the optional resin. A preferred example of this thermoplastic resin having carbonylic oxygen atoms (the oxygen atoms belonging to carbonyl groups) in the molecular framework is a flexible polyolefin resin having carbonylic oxygen atoms in the molecular framework (often referred to as "carbonyl-containing polyolefin resin"). It is a matter of course that this carbonyl-containing polyolefin resin can be used as the polyolefin resin serving as a constituent material of the pressure-sensitive adhesive tape base material because it is a polyolefin resin. Namely, the carbonyl-containing polyolefin resin may be used alone as the only polyolefin resin or may be used in combination with another polyolefin resin.

Preferred examples of the carbonyl-containing polyolefin resin include carbonyl-containing ethylene copolymers obtained from monomer ingredients comprising ethylene and a vinyl ester compound and/or an α,β-unsaturated carboxylic acid or derivative thereof (e.g., anhydride, ester, or chloride) and metal salts (ionomers) of the copolymers. Such carbonyl-containing ethylene copolymers or metal salts (ionomers) thereof generally have a melting point of 120°C or lower, preferably from 40 to 100°C. This melting point can be measured with a differential scanning calorimeter (DSC) in accordance with JIS K 7121.

Examples of the vinyl ester compound include esters of vinyl alcohol with a lower carboxylic acid (vinyl esters of lower carboxylic acids), such as vinyl acetate. Examples of the α,β-unsaturated carboxylic acid include (meth)acrylic acid, maleic acid, fumaric cad, and itaconic acid. Examples of the α,β-unsaturated carboxylic acid derivative are as follows. Examples of α,β-unsaturated carboxylic acid anhydrides include maleic anhydride and itaconic anhydride. Examples of *α*,β-unsaturated carboxylic acid esters include (meth)acrylic esters [e.g., alkyl esters of (meth)acrylic acid, such as methyl (meth)acrylate, ethyl (meth)acrylate, propyl (meth) acrylate, isopropyl (meth)acrylate, n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, lauryl (meth)acrylate, and stearyl (meth)acrylate; cycloalkyl esters of (meth)acrylic acid, such as cyclohexyl (meth)acrylate; and functional-group-containing (meth)acrylic esters such as glycidyl (meth)acrylate and 2-hydroxyethyl (meth)acrylate], maleic esters [e.g., (mono or di)alkyl esters of maleic acid, such as monomethyl maleate, monoethyl maleate, and diethyl maleate], and fumaric esters [e.g., (mono or di)alkyl esters of fumaric acid, such as monomethyl fumarate and monoethyl fumarate]. Preferred examples of the vinyl ester compound and/or α,β-unsaturated carboxylic acid or derivative thereof are vinyl acetate, (meth)acrylic acid, and (meth)acrylic esters. Preferred examples of the (meth)acrylic esters are alkyl esters of (meth)acrylic acid [in particular, ethyl (meth)acrylate, especially ethyl acrylate]. Such vinyl ester compounds and/or *α*,β-unsaturated carboxylic acids or derivatives thereof can be used alone or in combination of two or more thereof. The term "(meth)acrylic" as used herein refers to "acrylic and/or methacrylic"; and the term "(meth)acrylate" as used herein refers to "acrylate and/or methacrylate".

Preferred examples of the carbonyl-containing ethylene copolymers or metal salts (ionomers) thereof include ethylene/acrylic acid copolymers, ethylene/methacrylic acid copolymers, ethylene/ethyl acrylate copolymers, ethylene/acrylic acid/ethyl acrylate copolymers, ethylene/vinyl acetate copolymers, ethylene/vinyl acetate/ethyl acrylate copolymers, ethylene/glycidyl methacrylate copolymers, ethylene/glycidyl methacrylate/ethyl acrylate copolymers, and metal salts (ionomers) thereof. Such carbonyl-containing ethylene copolymers and metal salts (ionomers) thereof can be used alone or in combination of two or more thereof.

As the polyolefin resin can also be used a polymer alloy comprising ethylene components and propylene components. This polymer alloy is not particularly limited in constitution (form). Examples thereof include various constitutions (forms) such as (1) a polymer blend made up of two or more polymers physically mixed together (physical mixture), (2) a block copolymer or graft copolymer made up of two or more polymers bonded to each other through covalent bonds, and (3) an IPN (interpenetrating polymer network) structure made up of two or more polymers interlaced with each other without being bonded to each other through covalent bonds. Such a polymer alloy need not be homogeneous in composition (may have a distribution), and may be one made up of two or more polymers compatibilized with each other (compatible polymer alloy) or one made up of two or more incompatible polymers having a structure composed of separate phases (incompatible polymer alloy). Furthermore, the polyolefin resin may be one having such thermal properties that it shows two or more exothermic or endothermic peaks when measured with a differential scanning calorimeter (DSC measurement).

Examples of the polymer alloy comprising ethylene components and propylene components include mixtures (physical mixtures) of polypropylene (homopolypropylene or random polypropylene) and polyethylene (including a copolymer of ethylene and a small amount of other α-olefin(s)), propylene/ethylene copolymers, and terpolymers of propylene, ethylene, and another α-olefin (examples of the third α-olefin include 1-butene, 1-pentene, 1-hexene, 4-methyl-1-pentene, 1-heptene, and 1-octene; preferred of these is 1-butene). The term "homopolypropylene" used above means a polymer made up of monomer components consisting substantially of propylene only (made up of 100% propylene) (i.e., a homopolymer of propylene). The term "random polypropylene" means a propylene random copolymer in which ethylene components have been randomly copolymerized with propylene in an amount of about several percents based on all monomer components.

In the case where the polymer alloy is a copolymer (in particular, a block copolymer), this polymer alloy preferably is a copolymer, especially preferably a propylene/ethylene copolymer, produced by copolymerization in two or more steps. Such a copolymer obtained by copolymerization in two or more steps can be prepared in the following manner, which is described in JP-A-4-224809 (The term "JP-A" as used herein means an "unexamined published Japanese patent application"). First, propylene or a combination of propylene and another α-olefin is preliminarily polymerized in the first step of multistage polymerization in the presence of a catalyst comprising, e.g., a titanium compound and an organoaluminum compound to prepare a polypropylene (homopolymer of propylene) or a propylene/α-olefin copolymer (copolymer of propylene and the other α-olefin). Subsequently, in the second and any succeeding steps, propylene is copolymerized with ethylene and optionally with other α-olefin(s) in the presence of the resin composition obtained by the preliminary polymerization in the first step to thereby prepare the target copolymer. In this process, the polymer yielded by the preliminary polymerization in the firs step (polypropylene or propylene/α-olefin copolymer) and the polymer yielded by the copolymerization in the second and any succeeding steps (propylene/ethylene copolymer or propylene/ethylene/other α-olefin copolymer) are blended together on a molecular level in the second and any succeeding polymerization steps. Thus, the target polymer alloy is obtained.

Examples of the titanium compound include a solid catalyst comprising spherical particles having an average particle diameter of 15 µm obtained by pulverizing titanium trichloride together with magnesium chloride and treating the resultant powder with n-butyl orthotitanate, 2-ethylhexanol, ethyl p-toluylate, silicon tetrachloride, diisobutyl phthalate, etc. As the organoaluminum compound can be used, for example, an alkylaluminum compound such as triethylaluminum. It is possible to add a silicon compound such as diphenyldimethoxysilane as an electron donor or an iodine compound such as ethyl iodide to the polymerizer.

The polymer alloy described above, which comprises ethylene components and propylene components, preferably is one which is highly elastic at high temperatures, i.e., one which has, for example, a dynamic storage modulus (E') at 80°C of 40 MPa or higher and below 180 MPa (preferably from 45 to 160 MPa) and a dynamic storage modulus (E') at 120°C of 12 MPa or higher and below 70 MPa (preferably from 15 to 65 MPa), in view of the temperatures at which the pressure-sensitive adhesive tape or sheet is to be used. When a polymer alloy showing such dynamic storage moduli (E') is used, the pressure-sensitive adhesive tape base material (or the pressure-sensitive adhesive tape or sheet) can be sufficiently inhibited or prevented from thermally deforming. Specifically, in the case of a pressure-sensitive adhesive tape base material bearing a character and/or design constituted of recesses and protrusions formed in or on the base material as will be shown later, the state bearing the character and/or design is effectively retained over long even when the tape or sheet is used for electric-wire binding or electrical insulation in domestic electrical appliances or motor vehicles (i.e., used in high-temperature environments), as long as the pressure-sensitive adhesive tape base material has dynamic storage moduli (E') within those ranges.

Values of dynamic storage modulus (E') of a polymer alloy can be obtained by producing a test piece (thickness, 0.2 mm; width, 10 mm; length, 20 mm) of the polymer alloy and examining the test piece with a measuring apparatus, trade name "DMS 200 (manufactured by Seiko Instruments Inc.)" under the conditions of a mode of measurement of tensile mode, heating rate of 2°C/min, and frequency of 1 Hz to determine the dynamic storage modulus behavior of the test piece with temperature dispersion.

Specific examples of the polymer alloy having such dynamic storage moduli (E') include trade names "Catalloy KS-353P", "Catalloy KS-021P", and "Catalloy C200F", manufactured by Montell SDK Sunrise Ltd.

The inorganic flame retardant is not particularly limited. Examples thereof include metal hydroxides such as aluminum hydroxide, magnesium hydroxide, zirconium hydroxide, calcium hydroxide, and barium hydroxide; metal carbonates such as basic magnesium carbonate, magnesium calcium carbonate, calcium carbonate, barium carbonate, and dolomite; metal hydrates (hydrates of metal compounds) such as hydrotalcite and borax; and barium metaborate, magnesium oxide, and clay. Such inorganic flame retardants can be used alone or in combination of two or more thereof. Preferred inorganic flame retardants are metal hydroxides such as aluminum hydroxide, magnesium hydroxide, zirconium hydroxide, calcium hydroxide, and barium hydroxide, basic magnesium carbonate, and hydrotalcite. These inorganic flame retardants have an excellent effect of imparting flame retardancy and are economically advantageous.

The particle diameters of those inorganic flame retardants vary with the kinds of the retardants. However, in the case of metal hydroxides such as, e.g., aluminum hydroxide and magnesium hydroxide, the average particle diameters thereof are desirably about from 0.1 to 50 µm (preferably from 0.5 to 20 µm). Particle diameters (average particle diameters, etc.) can be measured by the laser diffraction method in accordance with JIS K 1150.

The inorganic flame retardant may be one which has undergone a surface treatment. Examples of the surface treatment include a silane coupling treatment. For this silane coupling treatment, a known or common silane coupling agent such as, e.g., an aminated silane coupling agent can be used.

The proportion of the inorganic flame retardant is generally about from 20 to 200 parts by weight (preferably from 40 to 150 parts by weight) per 100 parts by weight of the polyolefin resin. In case where the proportion of the inorganic flame retardant is smaller than 20 parts by weight per 100 parts by weight of the polyolefin resin, the pressure-sensitive adhesive tape base material (or pressure-sensitive adhesive tape or sheet) has reduced flame retardancy. On the other hand, proportions thereof larger than 200 parts by weight impair the flexibility and extensibility of the pressure-sensitive adhesive tape base material (or pressure-sensitive adhesive tape or sheet).

Red phosphorus may be used for the purpose of helping the inorganic flame retardant to form a char layer. The red phosphorus to be used is preferably one which has undergone a treatment for preventing the red phosphorus from generating any poisonous phosphine upon heating in the presence of water (surface stabilization treatment of red phosphorus). Preferred examples of such red phosphorus include ones coated with a film of a metal hydroxide selected from aluminum hydroxide, magnesium hydroxide, zinc hydroxide, and titanium hydroxide and ones coated with two layers consisting of the metal hydroxide film and, formed thereon, a coating of a thermoset resin (e.g., phenolic resin).

The amount of such a char formation aid, e.g., red phosphorus, to be used is not particularly limited. However, the amount thereof can be selected, for example, from the range of about from 2 to 10 parts by weight (preferably from 4 to 8 parts by weight) per 100 parts by weight of the polyolefin resin.

In the case where a char formation aid such as, e.g., red phosphorus is used, more preferred results can be obtained when it is used in combination with at least one compound selected from the group consisting of carbon black, boric acid salts, and silicone compounds (e.g., silicone oils, silicone rubbers, and silicone resins). The amount of this at least one compound selected from the group consisting of carbon black, boric acid salts, and silicone compounds to be used can be selected, for example, from the range of about from 0.5 to 10 parts by weight (preferably from 1 to 5 parts by weight) per 100 parts by weight of the polyolefin resin.

Various additives may be contained in the pressure-sensitive adhesive tape base material according to need. Examples thereof include inorganic fillers (e.g., titanium oxide and zinc oxide), antioxidants (e.g., amine compound antioxidants, quinoline compound antioxidants, hydroquinone compound antioxidants, phenolic antioxidants, phosphorus compound antioxidants, and phosphorous ester antioxidants), oxidation inhibitors, ultraviolet absorbers (e.g., salicylic acid derivatives, benzophenone compound ultraviolet absorbers, benzotriazole compound ultraviolet absorbers, and hindered amine ultraviolet absorbers), lubricants, plasticizers, and colorants (e.g., pigments and dyes).

Processes for producing the pressure-sensitive adhesive tape base material (e.g., methods for forming a film of a polyolefin resin) are not particularly limited. The pressure-sensitive adhesive tape base material is generally obtained by dry-blending a polyolefin resin with an inorganic flame retardant and optionally with various additives including a filer, kneading the mixture with a Banbury mixer, roll mill, extruder, or the like (optionally with heating), and then forming the resultant composition into a film or sheet by a known or common molding technique (e.g., compression molding, calendering, injection molding, or extrusion molding). A preferred process for producing the pressure-sensitive adhesive tape base material employs calendering or extrusion with a flat die (flat-die extrusion method).

The pressure-sensitive adhesive tape base material is in the form of a film or sheet. The thickness of the pressure-sensitive adhesive tape base material (plastic film or sheet) is not particularly limited and varies depending on uses of the pressure-sensitive adhesive tape or sheet. However, the thickness thereof is generally about from 0.01 to 1 mm (preferably from 0.05 to 0.5 mm). The pressure-sensitive adhesive tape base material may have a single-layer structure or may be composed of two or more layers. The pressure-sensitive adhesive tape base material may be subjected to various treatments according to need, such as a back side treatment, antistatic treatment, and priming treatment.

The pressure-sensitive adhesive tape base material bears, on one side thereof, a character and/or design constituted of a structure comprising recesses and/or protrusions united to the pressure-sensitive adhesive tape base material. Such a character and/or design can be imparted by forming, on that one side of the pressure-sensitive adhesive tape base material, recesses and protrusions which are united to the pressure-sensitive adhesive tape base material and are arranged so as to constitute the given character and/or design. Examples of the recesses and protrusions include: (1) recesses and protrusions formed by a method in which a mold, roll, or the like each having recesses and protrusions is used in producing a pressure-sensitive adhesive tape base material; (2) recesses and protrusions formed by subjecting a pressure-sensitive adhesive tape base material formed beforehand (in particular, a pressure-sensitive adhesive tape base material having a smooth surface) to a processing for forming recesses and protrusions, e.g., stamping; and (3) recesses and protrusions formed by a method in which a pressure-sensitive adhesive tape base material formed beforehand (in particular, a pressure-sensitive adhesive tape base material having a smooth surface) is coated with a plastic material capable of being united with the pressure-sensitive adhesive tape base material (this plastic material preferably is a polyolefin resin of the same kind as the pressure-sensitive adhesive tape base material) to form recesses and protrusions united to the pressure-sensitive adhesive tape base material. The recesses and protrusions constituting a character and/or design may be ones formed by one method only or ones formed by two or more methods.

A preferred method for forming the recesses and/or protrusions constituting a character and/or design is to stamp a pressure-sensitive adhesive tape base material formed beforehand which has a smooth surface. Specifically, a pressure-sensitive adhesive tape base material having a smooth surface is produced and then brought into contact with an embossing roll, embossing flat plate, or the like to thereby transfer a character and/or design constituted of recesses and protrusions to the pressure-sensitive adhesive tape base material.

In the case where the pressure-sensitive adhesive tape base material has recesses or protrusions constituting a character and/or design on one side thereof (the side opposite to the pressure-sensitive adhesive layer), the other side of the base material (the side facing the pressure-sensitive adhesive layer) may have protrusions or recesses corresponding to the recesses or protrusions constituting the character and/or design or may be flat. The protrusions or recesses formed on that other side (the side facing the pressure-sensitive adhesive layer) are covered with the pressure-sensitive adhesive layer.

For producing the pressure-sensitive adhesive tape base material, the calendering method or flat-die extrusion method is generally used. In both methods (calendering method and flat-die extrusion method), the base material is produced basically by heating a polyolefin resin to a temperature not lower than the melting point (melting temperature) of the resin, deforming the melt into a sheet form, and then gradually cooling the sheet. It is therefore desirable in either of the calendering method and flat-die extrusion method that stamping for forming recesses and protrusions constituting a character and/or design be conducted by performing a stamping step (step for embossing) after the molten resin (polyolefin resin) is deformed into a sheet form and before this sheet is completely cooled. Consequently, in the case where the calendering method, for example, is used, the sheet rolled is separated from the calendering rolls and, immediately thereafter, nipped by being passed between an embossing roll and a rubber roll, whereby a character or design can be transferred to a surface of the rolled pressure-sensitive adhesive tape base material. In the case of the flat-die extrusion method, a cooling roll having recesses and protrusions for embossing on the surface is used as the cooling roll to be disposed immediately after the die, whereby a character or design can be transferred to a surface of the pressure-sensitive adhesive tape base material as in the case of using the calendering method.

As described above, a pressure-sensitive adhesive tape base material having recesses and protrusions constituting a character or design on one side thereof (on the side opposite to the pressure-sensitive adhesive layer) can be produced by using an embossing roll, a cooling roll having recesses and protrusions for embossing on the surface thereof, or the like in a process heretofore in use for producing a pressure-sensitive adhesive tape base material. There is no need of adding a large apparatus. Therefore, a pressure-sensitive adhesive tape base material capable of retaining the state bearing a character and/or a design over long can be easily produced at low cost.

The character or design imparted to one side of the pressure-sensitive adhesive tape base material is not particularly limited, and various markings concerning product information can be employed. Examples of such product information include markings concerning recycling (e.g., a marking showing the materials of the pressure-sensitive adhesive tape or sheet and indicating that the product is suitable for recycling of resources; and a marking indicating that the product is suitable for incineration disposal), name of the manufacturer, product name, date to production, life limit, life period, logo, material or kind of the pressure-sensitive adhesive tape base material or pressure-sensitive adhesive, and kind and content of a component. The character or design may provide product information on only one matter or provide product information on two or more matters.

The character or design preferably is a marking concerning recycling from the standpoint of facilitating a judgement on disposal method at the time of discard after use of the pressure-sensitive adhesive tape or sheet (i.e., judgment as to whether the pressure-sensitive adhesive tape or sheet should be incinerated or subjected to recycling of resources, etc.). In particular, since the pressure-sensitive adhesive tape base material in the invention is constituted of a polyolefin resin and contains substantially no halogen atoms, incineration of the base material does not substantially generate any toxic gas such as a hydrogen halide (e.g., hydrogen chloride). The pressure-sensitive adhesive tape or sheet is hence suitable for incineration disposal. Because of this, a marking indicating that the pressure-sensitive adhesive tape or sheet is suitable for incineration disposal is optimal as the character or design.

It is a matter of course that when the date of production, life limit, life period, or the like is employed, the time for replacement of the pressure-sensitive adhesive tape or sheet can be seen at a glance. Consequently, when a combination of a marking concerning recycling with a marking showing the life limit or the like is employed as the character or design, then the time for replacement of the pressure-sensitive adhesive tape or sheet and the method of disposal thereof can be seen at a glance, whereby the efficiency of machine maintenance for safety, etc. can be greatly improved.

In the pressure-sensitive adhesive tape or sheet of the invention, the pressure-sensitive adhesive constituting the pressure-sensitive adhesive layer is not particularly limited. A pressure-sensitive adhesive suitably selected from known or common pressure-sensitive adhesives such as, e.g., rubber-based pressure-sensitive adhesives (e.g., natural-rubber-based pressure-sensitive adhesives and synthetic-rubber-based pressure-sensitive adhesives), acrylic pressure-sensitive adhesives, silicone pressure-sensitive adhesives, and urethane pressure-sensitive adhesives can be used. Such pressure-sensitive adhesives can be used alone or in combination of two or more thereof. The pressure-sensitive adhesive layer may have a single-layer structure or a multilayer structure. Various known additives may be contained in the pressure-sensitive adhesive layer according to need. Examples thereof include plasticizers, various stabilizers including ultraviolet absorbers and oxidation inhibitors, tackifier resins, fillers, colorants, antistatic agents, blowing agents, and surfactants.

The thickness of the pressure-sensitive adhesive layer (thickness on a dry basis) is, for example, about from 10 to 50 µm (preferably from 15 to 40 µm).

The pressure-sensitive adhesive layer can be formed by a known or common method. For example, the casting method, roll coater method, reverse coater method, doctor blade method, or the like can be used to form the adhesive layer. Use may be made of a method in which a pressure-sensitive adhesive tape base material (in particular, a pressure-sensitive adhesive tape base material having recesses and protrusions constituting a character or design) is formed and, thereafter, a pressure-sensitive adhesive layer is successively formed by, e.g., applying a pressure-sensitive adhesive. It is also possible to conduct a step for forming a pressure-sensitive adhesive tape base material and a step for applying a pressure-sensitive adhesive as separate steps.

The pressure-sensitive adhesive layer may be protected with a release film (release linear). The pressure-sensitive adhesive tape or sheet may have other layers (e.g., an interlayer and a prime coat layer) as long as these layers do not impair the effects of the invention.

When the pressure-sensitive adhesive tape or sheet is composed of, for example, a pressure-sensitive adhesive tape base material, a pressure-sensitive adhesive layer formed on one side of the pressure-sensitive adhesive tape base material, and a back coating layer formed on the other side of the pressure-sensitive adhesive tape base material (on the side bearing recesses and protrusions constituting a character or design), then the surface of the pressure-sensitive adhesive layer can be superposed on the back side of the sheet (e.g., the back coating layer side) to thereby protect the pressure-sensitive adhesive layer.

Furthermore, the pressure-sensitive adhesive tape or sheet can be wound into a roll. Namely, it can be produced in the form of a roll (rolled pressure-sensitive adhesive tape). In the case where the pressure-sensitive adhesive tape or sheet is not wound into a roll, it can be produced as a pressure-sensitive adhesive sheet.

The pressure-sensitive adhesive tape or sheet of the invention preferably has the following values of dynamic storage modulus (E'). From the standpoint of inhibiting or preventing thermal deformation, the dynamic storage modulus (E') of the pressure-sensitive adhesive tape or sheet as measured at 80°C is preferably 25 MPa or higher, and the dynamic storage modulus (E') thereof as measured at 120°C is preferably 10 MPa or higher. From the standpoints of flexibility and extensibility, the dynamic storage modulus (E') of the pressure-sensitive adhesive tape or sheet as measured at 80°C is preferably 200 MPa or lower, and the dynamic storage modulus (E') thereof as measured at 120°C is preferably 150 MPa or lower. Values of the dynamic storage modulus (E') of a pressure-sensitive adhesive tape or sheet can be obtained in the following manner. A test piece (width, 10 mm; length, 20 mm) is cut out of a pressure-sensitive adhesive tape or sheet obtained by forming a pressure-sensitive adhesive layer on one side of a pressure-sensitive adhesive tape base material having a thickness of 0.2 mm. This test piece is examined with a measuring apparatus, trade name "DMS 200 (manufactured by Seiko Instruments Inc.)" under the conditions of a mode of measurement of tensile mode, heating rate of 2°C/min, and frequency of 1 Hz to determine the dynamic storage modulus behavior of the test piece with temperature dispersion.

It is noted that the dynamic storage modulus (E') of a pressure-sensitive adhesive tape or sheet is almost the same as the dynamic storage modulus (E') of the pressure-sensitive adhesive tape base material, and the pressure-sensitive adhesive layer exerts almost no influence thereon. Consequently, the dynamic storage modulus (E') of a pressure-sensitive adhesive tape or sheet is substantially equal to the dynamic storage modulus (E') of the pressure-sensitive adhesive tape base material. Although the thickness of the pressure-sensitive adhesive layer in measurements of the dynamic storage modulus (E') of a pressure-sensitive adhesive tape or sheet is hence not particularly limited, it may be, for example, 20 µm.

The pressure-sensitive adhesive tape or sheet of the invention has flame retardancy, contains substantially no halogen atoms, and retains the state bearing a character and/or a design even after long-term use. Consequently, even after the lapse of a prolonged time period from application, the product information imparted to the pressure-sensitive adhesive tape or sheet can be read. In particular, the pressure-sensitive adhesive tape or sheet can be made to have such a constitution that at the time of discard after use, the pressure-sensitive adhesive tape or sheet can be easily judged as to whether it should be subjected to recycling of resources or incineration disposal.

In electrical appliances and automotive parts, many wire harnesses are used and poly(vinyl chloride) pressure-sensitive adhesive tapes or sheets have hitherto been used for the binding thereof. In the future, however, many pressure-sensitive adhesive tapes or sheets which mainly are pressure-sensitive adhesive tapes or sheets employing a polyolefin resin as the base material film (pressure-sensitive adhesive tape base material) tend to come on to the market as substitutes for the poly(vinyl chloride) pressure-sensitive adhesive tapes or sheets. When the pressure-sensitive adhesive tape or sheet of the invention is used, the suitability or unsuitability of the pressure-sensitive adhesive tape or sheet for incineration disposal or recycling can be easily judged at the time of discard. The pressure-sensitive adhesive tape or sheet of the invention can hence contribute greatly to the mitigation of environmental problems and to the recycling of resources.

Furthermore, when the date of production, life limit, and life period are recorded on the pressure-sensitive adhesive tape or sheet as characters and/or designs constituted of a structure comprising recesses and protrusions united to the pressure-sensitive adhesive tape base material, then the time of replacement of the pressure-sensitive adhesive tape or sheet can be seen even after application. This pressure-sensitive adhesive tape or sheet can hence contribute greatly to machine maintenance and safety.

The invention will be explained below in greater detail by reference to Examples, but the invention should not be construed as being limited by the Example in any way.

### EXAMPLE 1

A hundred parts by weight of a polyolefin resin (trade name "Sun allomer KS353P", manufactured by ADFLEX) was dry-blended with 100 parts by weight of an inorganic flame retardant (trade name "KISUMA 5A", manufactured by Kyowa Chemical Industry Co., Ltd.). The resultant mixture was melt-kneaded with a pressure kneader to prepare a resin composition. This resin composition was formed into a film (thickness, 0.1 mm) with calender rolls and, immediately after the film formation, brought into contact with an embossing roll to successively impress "SUITABLE FOR INCINERATION" on the surface. Thus, a film-form base material (pressure-sensitive adhesive tape base material) was produced.

An acrylic pressure-sensitive adhesive was applied in a thickness of 20 µm on a dry basis to the pressure-sensitive adhesive tape base material on the side opposite to the side impressed. Thus, a pressure-sensitive adhesive tape was produced. This pressure-sensitive adhesive tape was wound on a core to obtain a roll-form pressure-sensitive adhesive tape as shown in Fig. 1. Fig. 1 is a diagrammatic view illustrating the pressure-sensitive adhesive tape produced in Example 1. In Fig. 1, numeral 1 denotes a pressure-sensitive adhesive tape rolled on a core, 2 denotes a pressure-sensitive adhesive tape wound into a roll, 2a denotes that side of the pressure-sensitive adhesive tape 2 which is opposite to the pressure-sensitive adhesive layer, and 3 denotes the core. As shown in Fig. 1, the characters "SUITABLE FOR INCINERATION" formed by stamping can be seen from the side 2a opposite to the pressure-sensitive adhesive layer.

A piece having a length of 10 cm was cut out of the pressure-sensitive adhesive tape wound into a roll, and was applied to a stainless-steel plate. The adhesive tape piece applied was allowed to stand in a 120°C atmosphere for 7 days, and the state of the characters "SUITABLE FOR INCINERATION" formed by stamping was then visually examined. As a result, no change was observed in the characters, which were in the same state as those just after the production of the pressure-sensitive adhesive tape.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive tape or sheet which comprises a base material comprising a polyolefin resin and an inorganic flame retardant and containing substantially no halogen atoms and a pressure-sensitive adhesive layer formed on one side of the base material, the base material bearing on the other side thereof at least one of a character and a design constituted of a structure comprising recesses, protrusions or both of them united to the base material.

2. The pressure-sensitive adhesive tape or sheet as claimed in claim 1, wherein said at least one of a character and a design has been formed by stamping the base material.

3. The pressure-sensitive adhesive tape or sheet as claimed in claim 1, wherein said at least one of a character and a design is a marking concerning recycling.

4. The pressure-sensitive adhesive tape or sheet as claimed in claim 2, wherein said at least one of a character and a design is a marking concerning recycling.

5. The pressure-sensitive adhesive tape or sheet as claimed in claim 1, wherein said polyolefin resin is polyethylene, polypropylene, polybutene, polybutylene, polybutadiene, or ethylene/propylene copolymer.

6. The pressure-sensitive adhesive tape or sheet as claimed in claim 1, wherein said polyolefin resin is polyethylene or polypropylene.

7. The pressure-sensitive adhesive tape or sheet as claimed in claim 1, wherein said polyolefin resin is polyethylene.

8. The pressure-sensitive adhesive tape or sheet as claimed in claim 1, wherein said inorganic. flame retardant is a metal hydroxide, a metal carbonate, a metal hydrate, barium metaborate, magnesium oxide, or clay.

9. The pressure-sensitive adhesive tape or sheet as claimed in claim 1, wherein said inorganic flame retardant is a metal hydroxide, basic magnesium carbonate, or hydrotalcite.
